# EUROPEAN PATENT APPLICATION

(11) **EP 4 842 017 A1**
(43) Date of publication of application: **18.11.2026**
(21) Application number: 24926609.9
(22) Date of filing: 01.07.2024
(51) Int. Cl.: H04W 4/16

(54) **COMMUNICATION METHOD AND APPARATUS**

(30) Priority: 29.02.2024 CN 202410229465
(71) Applicant: Honor Device Co., Ltd., Shenzhen, Guangdong 518040 (CN)
(72) Inventor: LI, Haibo, Shenzhen, Guangdong 518040 (CN)
(74) Representative: MERH-IP Matias Erny Reichl Hoffmann Patentanwälte PartG mbB
(86) International application number: PCT/CN2024/102883
(87) International publication number: WO 2025/179740

(57) **Abstract**

This application provides a communication method and apparatus. A terminal sends a tracking area update request message in a first network, with no tracking area update accept message received in the first network; the terminal returns from the first network to a second network; and the terminal sends a registration request message in the second network, where the registration request message carries a first message, the registration request message is used for initiating mobility registration updating, and the first message indicates that tracking area updating for the terminal in the first network is not completed. It can be learned that, in a case in which the terminal does not receive a tracking area update accept message in the first network, the terminal adds the first message to the registration request message when performing a mobility updating registration in the second network, to inform the network that tracking area updating for the terminal in the first network is not completed, laying a foundation for the network to respond based on the case, and reducing a possibility that the terminal cannot implement services in the second network.

## Description

This application claims priority to Chinese Patent Application No. 2024102294658, filed with the China National Intellectual Property Administration on February 29, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In the field of mobile communication, a terminal implements services such as calling and a short message service by interacting with a mobile communication network.

Currently, in some cases, a terminal's services based on a mobile communication network may fail to be implemented. For example, after the terminal returns from a 4G network to a 5G network, another terminal initiates a call to the terminal, but a calling service with the terminal cannot be established.

### SUMMARY

This application provides a communication method and apparatus, to resolve a problem that a terminal cannot implement services based on a mobile communication network.

To achieve the foregoing objective, this application provides the following technical solutions.

According to a first aspect of this application, a communication method is provided. The communication method includes: A terminal sends a tracking area update request message in a first network, with no tracking area update accept message received in the first network; the terminal returns from the first network to a second network; and the terminal sends a registration request message in the second network, where the registration request message carries a first message, the registration request message is used for initiating mobility registration updating, and the first message indicates that tracking area updating for the terminal in the first network is not completed. It can be learned that, in a case in which the terminal does not receive a tracking area update accept message in the first network, the terminal adds the first message to the registration request message when performing a mobility updating registration in the second network, to inform the network that tracking area updating for the terminal in the first network is not completed, laying a foundation for the network to respond based on the case (for example, obtain information of the terminal from the first network), and reducing a possibility that the terminal cannot implement services in the second network due to the network's failure to find the information of the terminal (for example, context information).

In some implementations, before the terminal sends the tracking area update request message in the first network, the method further includes: In response to an operation of disabling the second network on the terminal, the terminal returns from the second network to the first network; and correspondingly, that the terminal returns from the first network to the second network includes: in response to an operation of enabling the second network on the terminal, the terminal returns from the first network to the second network. For example, after a user performs an operation of disabling a 5G network on the terminal, the terminal returns from the 5G network to a 4G network; and after the user performs an operation of enabling the 5G network on the terminal, the terminal returns from the 4G network to the 5G network. It can be learned that an operation performed on the terminal can trigger a change of the network to which the terminal connects. In some cases, for example, when the user enables the 5G network shortly after disabling the 5G network on the terminal, the terminal may be unreachable when being called or fail to receive a short message service message in the 5G network. The communication method provided in this application is applicable to this scenario, helping reduce, in this scenario, a possibility that the terminal is unreachable when being called or fails to receive a short message service message in the 5G network.

In some implementations, the first message includes the tracking area update request message or a notification message, where the notification message indicates that the terminal does not receive a tracking area update accept message in the first network. This helps the second network obtain the information of the terminal from the first network based on the tracking area update request message. When the first message is the tracking area update request message, this is compatible with an existing communication protocol, reducing costs of network reconstruction. When the first message is a notification message, this helps the network respond more flexibly. For example, the second network may obtain the information of the terminal from the first network, or the terminal may be directly triggered to initiate an initial registration.

In some implementations, before the registration request message is sent in the second network, the method further includes: The terminal determines that the tracking area update message is already sent in the first network. This helps perform precise determining of that tracking area updating for the terminal in the first network is not completed.

In some implementations, before the registration request message is sent in the second network, the method further includes: The terminal determines that no tracking area update accept message is received in the first network. This helps perform more precise determining of that tracking area updating for the terminal in the first network is not completed.

In some implementations, after the terminal sends the registration request message in the second network, the method further includes: The terminal receives a registration reject message; and the terminal initiates an initial registration in the second network. The initial registration enables the network to obtain the information of the terminal, helping increase a possibility that the terminal implements services in the second network.

In some implementations, the registration request message further carries a first field, and the first field indicates that a type of the registration request message is mobility registration updating. This manner is compatible with the existing communication protocol, helping reduce costs of terminal and network reconstruction.

According to a second aspect of this application, a communication method is provided. The communication method includes: A terminal sends a tracking area update request message in a first network, with no tracking area update accept message received in the first network; the terminal returns from the first network to a second network; and the terminal initiates an initial registration in the second network. The communication method differs from the conventional technology in the following: In a case in which the terminal sends a tracking area update request message in the first network but does not receive a tracking area update accept message in the first network, the terminal no longer initiates mobility registration updating but initiates an initial registration after returning to the second network. Therefore, the network can obtain the information of the terminal, increasing a possibility that services of the terminal in the second network are successful.

In some implementations, before the terminal sends the tracking area update request message in the first network, the method further includes: In response to an operation of disabling the second network on the terminal, the terminal returns from the second network to the first network; and that the terminal returns from the first network to the second network includes: in response to an operation of enabling the second network on the terminal, the terminal returns from the first network to the second network.

In some implementations, before the terminal initiates the initial registration in the second network, the method further includes: The terminal determines that tracking area updating is not completed in the first network. Because the initial registration results in at least a significant change in the network, determining that tracking area updating is not completed in the first network helps ensure that the initial registration is performed only when necessary, to reduce unnecessary network changes.

In some implementations, determining that tracking area updating is not completed in the first network includes: determining that in the first network, the tracking area update request message is already sent but no tracking area update accept message is received. In this way, that tracking area updating is not completed is determined based on messages sent and received during a tracking area update procedure, obtaining a more accurate determining result.

According to a third aspect of this application, a communication method is provided. The communication method includes: A core network device in a second network receives a registration request message sent by a terminal, where the registration request message carries a notification message, the notification message indicates that tracking area updating for the terminal in a first network is not completed, and the registration request message is used for initiating mobility registration updating in the second network. Because the registration request message used for initiating mobility registration updating carries the notification message, the second network can learn that tracking area updating for the terminal in the first network is not completed, laying a foundation for the second network to be able to respond to increase a possibility that the terminal successfully implements services in the second network.

In some implementations, after the registration request message sent by the terminal is received, the method further includes: The core network device in the second network obtains routing information of the terminal from a core network device in the first network. In this way, the possibility that the terminal successfully implements services based on the second network is increased.

In some implementations, after the registration request message sent by the terminal is received, the method further includes: The core network device in the second network sends a registration reject message to the terminal, where the registration reject message triggers the terminal to initiate an initial registration to the core network device in the second network. The initial registration helps increase the possibility that the terminal successfully implements services in the second network.

According to a fourth aspect of this application, a terminal is provided. The terminal includes a processor, where the processor includes a baseband processor, and the baseband processor is configured to implement the communication method according to the first or second aspect of this application.

In some implementations, the processor further includes an application processor; the baseband processor is further configured to implement a communication function based on a first network or a second network; and the application processor is configured to send, to the baseband processor, a message of disabling or enabling the second network.

According to a fifth aspect of this application, a chip is provided. The chip includes: a modem, configured to implement the communication method according to the first or second aspect of this application.

According to a sixth aspect of this application, a network device is provided. The network device includes a memory and a processor, where the memory is configured to store a computer program, and the processor is configured to run the computer program to implement the communication method according to the third aspect of this application.

### BRIEF DESCRIPTION OF DRAWINGS

FIG. 1 is a diagram of an example of a scenario in which a mobile phone implements services based on a 5G network or a 4G network;
FIG. 2 is a flowchart of a mobile phone completing registration in a 5G network after returning from a 4G network to the 5G network;
FIG. 3 is another flowchart of a mobile phone completing registration in a 5G network after returning from a 4G network to the 5G network;
FIG. 4 is a diagram of an example of a structure of a terminal according to an embodiment of this application;
FIG. 5 is a flowchart of a communication method according to an embodiment of this application;
FIG. 6 is a flowchart of another communication method according to an embodiment of this application; and
FIG. 7 is a flowchart of another communication method according to an embodiment of this application.

### DESCRIPTION OF EMBODIMENTS

The following clearly and completely describes the technical solutions in embodiments of this application with reference to the accompanying drawings in embodiments of this application. Terms used in the following embodiments are merely for a purpose of describing specific embodiments, but are not intended to limit this application. As used in the specification and the appended claims of this application, singular expressions "one", "a/an", "the", "the foregoing", and "this" are intended to also include expressions such as "one or more", unless otherwise explicitly indicated in the context. It should also be understood that, in embodiments of this application, "one or more" means one, two, or more than two; and "and/or" describes an association between associated objects, and indicates that three relationships may exist. For example, A and/or B may indicate the following cases: Only A exists, both A and B exist, and only B exists, where A and B may be singular or plural. The character "/" typically indicates an "or" relationship between associated objects.

Reference to "an embodiment", "some embodiments", or the like described in this specification means that one or more embodiments of this application include a specific feature, structure, or characteristic described with reference to the embodiment. Therefore, expressions such as "in an embodiment", "in some embodiments", "in other embodiments", and "in some additional embodiments" that appear in different parts of this specification do not necessarily all mean referring to a same embodiment, but mean referring to "one or more but not all embodiments", unless otherwise specifically emphasized in another manner. The terms "comprise", "include", "have", and variations thereof all mean "including but not limited to", unless otherwise specifically emphasized in another manner.

"A plurality of" used in embodiments of this application means two or more. It should be noted that, in descriptions of embodiments of this application, words such as "first" and "second" are used for distinguishing purposes only, and shall not be understood as indicating or implying relative importance, or indicating or implying an order.

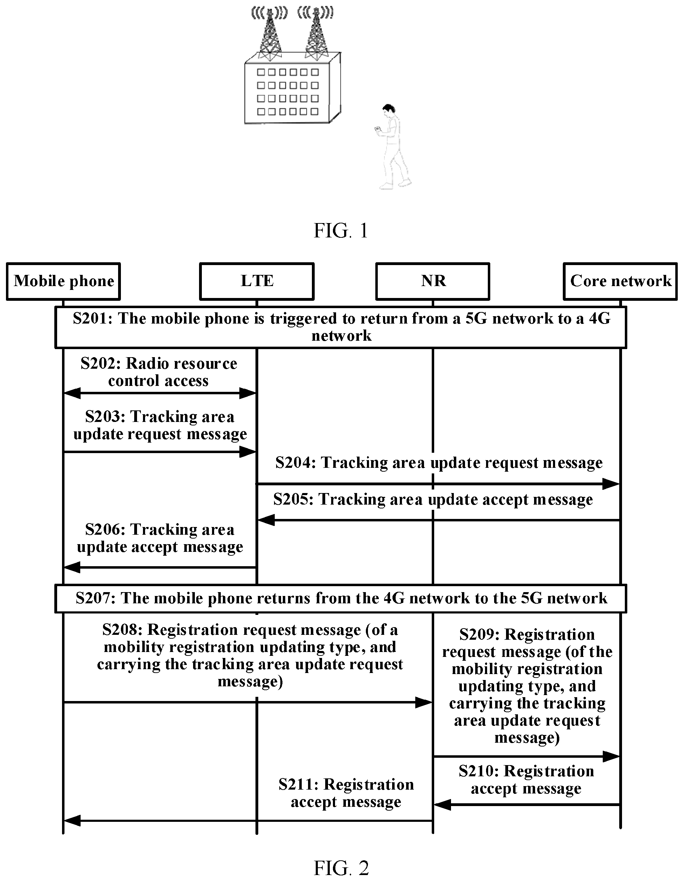

As mobile communication develops, most terminals support a plurality of communication standards. FIG. 1 is used as an example. A mobile phone can implement services based on a 5G network, and can also implement services based on a 4G network.

During research, inventors find that, in a scenario in which a terminal returns from a 4G network to a 5G network, the terminal may be unreachable when being called or fail to receive a short message service message for a long time. However, there is a low possibility that a calling party and a service of sending short message service messages are not normal.

Assuming that a second terminal returns from the 4G network to the 5G network, being unreachable when being called may be understood as that a first terminal initiates a call to the second terminal, but a call cannot be established between the first terminal and the second terminal; and failure to receive a short message service message may be understood as that the first terminal sends a short message service message to the second terminal, but the second terminal does not receive the short message service message.

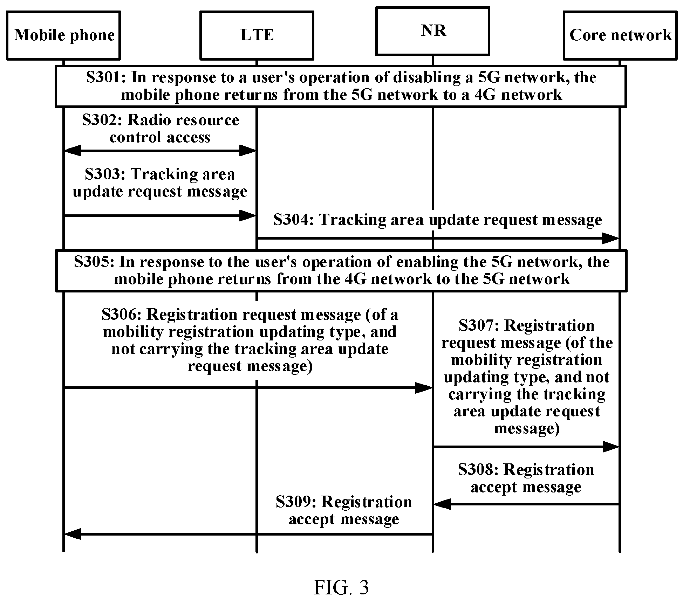

With reference to procedures shown in FIG. 2 and FIG. 3, the following analyzes causes of the problem that the terminal is unreachable when being called or fails to receive a short message service message for a long time. In FIG. 2 and FIG. 3, an example in which the terminal is a mobile phone is used for description, LTE represents a radio access apparatus in the 4G network, NR represents a radio access apparatus in the 5G network, and core networks of the 4G network and the 5G network are collectively referred to as a core network.

FIG. 2 shows an example of a procedure of a mobile phone completing registration after returning from a 4G network to a 5G network. The procedure shown in FIG. 2 enables the mobile phone to be properly called and to properly receive a short message service message. In FIG. 2, the following steps are included.

S201: The mobile phone is triggered to return from the 5G network to the 4G network.

In some implementations, the 5G network or an NR network is disabled on the mobile phone, causing the mobile phone to return from the 5G network to the 4G network. In other implementations, quality of the 5G network is poor, causing the mobile phone to return from the 5G network to the 4G network.

The implementations are merely examples and are not used as limitations.

The mobile phone being triggered to return from the 5G network to the 4G network includes at least: The mobile phone searches for a 4G cell and camps on the 4G cell.

S202: The mobile phone and LTE complete radio resource control (Radio Resource Control, RRC) access.

S203: The mobile phone sends a tracking area update request (Tracking Area Update Request) message to LTE.

In other words, the mobile phone initiates a tracking area update (Tracking Area Update, TAU) procedure after being in the 4G cell.

S204: LTE sends the tracking area update request message to the core network.

S205: The core network sends a tracking area update accept (Tracking Area Update Accept) message to LTE.

S206: LTE sends the tracking area update accept message to the mobile phone.

It is assumed herein that S207 is performed after S206.

S207: After receiving the tracking area update accept message, the mobile phone returns from the 4G network to the 5G network.

In some implementations, the 5G or NR network is enabled on the mobile phone, causing the mobile phone to return from the 4G network to the 5G network. In other implementations, quality of the 5G network improves, causing the mobile phone to return from the 4G network to the 5G network. The implementations are merely examples and are not used as limitations.

S208: The mobile phone sends a registration request (Registration Request) message to NR. The registration request message carries the tracking area update request (Tracking Area Update Request, TAU req) message.

According to an existing communication protocol, in a scenario limited by S201 to S207, in this step, the mobile phone initiates a registration procedure for mobility and periodic registration updating (that is, a registration type is mobility registration updating) to NR. In addition, in the scenario limited by S201 to S207, the registration for mobility and periodic registration updating initiated by the mobile phone can meet the following conditions: 1) A UE operating in single-registration mode performs an inter-system change from S1 mode to N1 mode; 2) a registration procedure is initiated in 5GMM-IDLE mode; and 3) the UE has received an "N26 interface supported" indication from the network. When the conditions are met, the registration request carries the TAU req message as specified in the communication protocol.

According to the existing communication protocol, a type of the registration request message sent in this step is mobility registration updating (mobility registration updating, MRU).

S209: NR sends, to the core network, the registration request carrying the TAU req message.

S210: The core network sends a registration accept (Registration Accept) message to NR.

S211: NR sends the registration accept message to the mobile phone.

At this point, the mobile phone resides in NR and is in an idle (IDLE) state. Because the core network can obtain the TAU req message, the core network can obtain information of the mobile phone on the 4G network (for example, context information). Therefore, the mobile phone can be properly called and can properly receive a short message service message.

FIG. 3 is an example of another procedure of a mobile phone completing registration after returning from a 4G network to a 5G network. The procedure may cause the problem that the terminal is unreachable when being called or fails to receive a short message service message for a long time. In FIG. 3, the following steps are included.

S301: In response to a user's operation of disabling the 5G network, the mobile phone returns from the 5G network to the 4G network.

The mobile phone returning from the 5G network to the 4G network includes at least: The mobile phone searches for a 4G cell and camps on the 4G cell.

S302: The mobile phone and LTE complete RRC access.

S303: The mobile phone sends a tracking area update request (Tracking Area Update Request) message to LTE.

In other words, the mobile phone initiates a tracking area update (Tracking Area Update, TAU) procedure after being in the 4G cell.

S304: LTE sends the tracking area update request message to the core network.

It is assumed herein that, in a case in which the mobile phone has not yet received a tracking area update accept message, the user enables the 5G network, that is, the mobile phone is triggered to perform S305.

S305: In response to the user's operation of enabling the 5G network, the mobile phone returns from the 4G network to the 5G network.

Returning from the 4G network to the 5G network includes at least: searching for a 5G cell and camping on the 5G cell.

S306: The mobile phone sends a registration request (Registration Request) message to NR.

The inventors find that, according to an existing communication protocol, because the mobile phone does not receive a tracking area update accept message after S304, the mobile phone may still consider that the mobile phone registered to the 5G network last time (the most recent time), instead of the 4G network. Therefore, the mobile phone determines that the following condition is not met: 1) A UE operating in single-registration mode performs an inter-system change from S1 mode to N1 mode. For this reason, the registration request sent in S306 does not carry the TAU req message.

In other words, S306 differs from S208 in that the registration request message for mobility and periodic registration updating sent by the mobile phone to NR does not carry the TAU req message.

S307: NR sends the registration request message to the core network.

It may be understood that the registration request message forwarded by NR to the core network does not carry the TAU req message, either.

S308: The core network sends a registration accept (Registration Accept) message to NR.

S309: NR sends the registration accept message to the mobile phone.

At this point, the mobile phone resides in NR and is in an idle (IDLE) state.

During research, the inventors further find that, because the core network does not obtain the TAU req message that the mobile phone sends on the 4G network, the core network cannot obtain information of the mobile phone on the 4G network (for example, context information). Therefore, even if the core network sends the registration accept message, the following case occurs, possibly due to failure to be compatible with the TAU req message received on the 4G network: When receiving a call to the mobile phone or a short message service message to be sent to the mobile phone, the core network cannot determine that the core network needs to page the mobile phone on the NR (5G) network. As a result, the problem is caused that the mobile phone is unreachable when being called or fails to receive a short message service message.

It can be learned with reference to FIG. 2 and FIG. 3 that, in the scenario in which the mobile phone quickly returns to the 5G network after leaving the 5G network, the mobile phone may have already sent a tracking area update request message in the 4G network but does not receive a tracking area accept message, and in this case, according to the existing protocol, the mobile phone does not add the tracking area update request message to a registration request for mobility and periodic registration updating after returning to the 5G network. As a result, the problem may be caused that the mobile phone is unreachable when being called or fails to receive a short message service message.

For a purpose of resolving the foregoing problem, based on the inventors' research on a root cause of the problem, an embodiment of this application discloses a communication method. The communication method is used on a terminal.

In embodiments provided in this application, the terminal may be in various forms, for example, a mobile phone (mobile phone), a tablet computer (Pad), a computer with wireless transmission and reception functions, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or a wearable terminal device. Sometimes, the terminal may also be referred to as a terminal device, a user equipment (user equipment, UE), an access terminal device, a vehicle-mounted terminal, an industrial control terminal, a UE unit, a UE station, a mobile station, a mobile console, a remote station, a remote terminal device, a mobile device, a UE terminal device, a terminal device, a wireless communication device, a UE agent, a UE apparatus, or the like. The terminal may alternatively be a fixed terminal or a mobile terminal.

A communication system on which the terminal relies to implement communication functions may be a 2nd generation (2G) communication system, a 3rd generation (3G) communication system, an LTE system (4G), a 5th generation (5G) communication system, a hybrid architecture of LTE and 5G, a 5G new radio (5G New Radio, 5G NR) system, a new communication system emerging with future development of communication, or the like.

In this embodiment, a 4G network and a 5G network are used as an example for illustration, but are not used as a limitation.

An access apparatus communicating with the terminal may be a base station. The base station may be any device that is located on a network side and has wireless transmission and reception functions, including but not limited to: an evolved NodeB (NodeB or eNB or e-NodeB, evolutional Node B) in long term evolution (long term evolution, LTE), a base station (gNodeB or gNB) or a transmission reception point (transmission receiving point/transmission reception point, TRP) in new radio (new radio, NR), a base station emerging with subsequent evolution of 3GPP, an access node in a Wi-Fi system, a wireless relay node, a wireless backhaul node, or the like. The base station may be a macro base station, a micro base station, a picocell base station, a small cell, a relay station, a balloon station, or the like. The base station may include one or more co-located or non-co-located transmission reception points (Transmission Reception Points, TRPs). The base station may alternatively be a radio controller, a central unit (central unit, CU), and/or a distributed unit (distributed unit, DU) in a cloud radio access network (cloud radio access network, CRAN) scenario. The base station may communicate with the terminal, or may communicate with the terminal via a relay station. The terminal may communicate with a plurality of base stations supporting different technologies. For example, the terminal may communicate with a base station supporting an LTE network, or may communicate with a base station supporting a 5G network, or may be connected to both a base station supporting an LTE network and a base station supporting a 5G network.

A network device communicating with the access apparatus may be a core network device. The network device includes at least a memory and a processor.

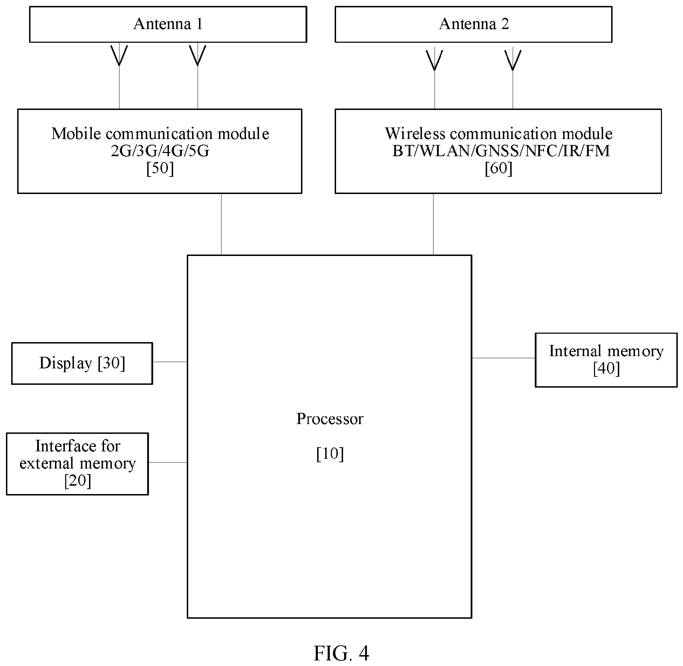

FIG. 4 is a diagram of an example of a structure of a terminal according to an embodiment of this application. The terminal includes a processor 10, an interface for external memory 20, a display 30, an internal memory 40, an antenna 1, an antenna 2, a mobile communication module 50, a wireless communication module 60, and the like.

It may be understood that the structure illustrated in this embodiment does not constitute a specific limitation on the terminal. In other embodiments, the terminal may include more or fewer components than those shown in the figure, some components may be combined, some components may be split, or different component arrangements may be used. The components shown in the figure may be implemented by hardware, software, or a combination of software and hardware.

The processor 10 may include one or more processing units, and includes at least an application processor (application processor, AP) and a modem (Modem). Different processing units may be separate devices, or may be integrated into one or more processors. At least one type of chips constitutes a processing unit. A type of chips is baseband processing chips. A baseband processing chip includes one or more modems.

In this embodiment of this application, an example of a function of the AP is: in response to a user's operation of disabling or enabling a 5G network, sending a message of disabling or enabling the 5G network to the modem. The modem is configured to implement baseband communication functions, and specific functions implemented in embodiments of this application are described in detail in conjunction with the following embodiments.

The interface for external memory 20 may be configured to connect to an external memory card, for example, a micro SD card, to expand a storage capacity of the terminal. The external memory card communicates with the processor 10 via the interface for external memory 20, to implement a data storage function. For example, files such as music and videos are saved in the external memory card.

The internal memory 40 may be configured to store computer-executable program code, and the executable program code includes instructions. By running the instructions stored in the internal memory 40, the processor 10 executes various functional applications and data processing of the terminal.

A wireless communication function of the terminal may be implemented by the antenna 1, the antenna 2, the mobile communication module 50, the wireless communication module 60, the modem, a baseband processor, and the like.

The antenna 1 and the antenna 2 are configured to transmit and receive electromagnetic wave signals. Each antenna in the terminal may be configured to cover one or more communication frequency bands. Different antennas may be further multiplexed, to improve utilization of the antennas. For example, the antenna 1 may be multiplexed as a diversity antenna for a wireless local area network. In other embodiments, the antennas may be used in combination with a tuning switch.

The mobile communication module 50 may provide wireless communication solutions, including 2G, 3G, 4G, 5G, and the like, that are applied to the terminal. The mobile communication module 50 may include at least one filter, switch, power amplifier, low noise amplifier (low noise amplifier, LNA), and the like. The mobile communication module 50 may receive an electromagnetic wave by using the antenna 1, perform processing such as filtering and amplification on the received electromagnetic wave, and transmit the electromagnetic wave to the modem for demodulation. The mobile communication module 50 may further amplify a signal that is obtained after the modem performs modulation, and convert the signal into an electromagnetic wave by using the antenna 1, for radiation. In some embodiments, at least some of functional modules of the mobile communication module 50 may be disposed in the processor 10. In some embodiments, at least some of functional modules of the mobile communication module 50 may be disposed in a same device as at least some of modules of the processor 10. In some embodiments, the terminal initiates or receives a call request by using the mobile communication module 50 and the antenna 1.

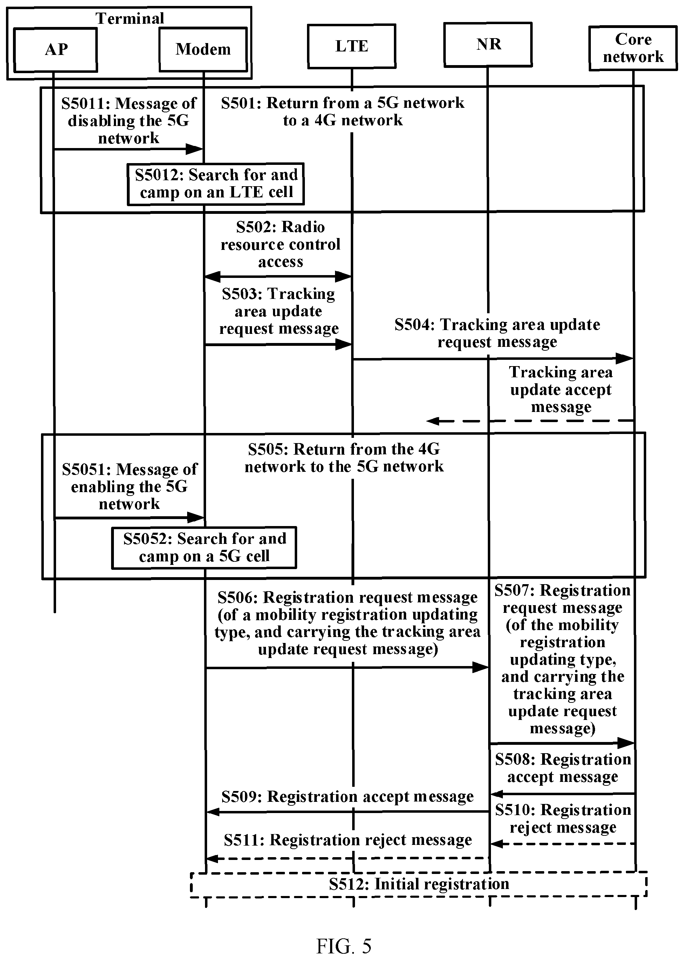

FIG. 5 shows a procedure of a communication method according to an embodiment of this application. The procedure includes the following steps.

S501: A terminal returns from a 5G network to a 4G network.

In some implementations, a user disables the 5G network on the terminal, triggering the terminal to return from the 5G network to the 4G network. An example is provided by S5011 and S5012: The user disables the 5G network on the terminal based on an interface of the terminal. An AP in the terminal sends, to a modem based on the user's operation of disabling the 5G network on the terminal, a message of disabling the 5G network. In response to the message of disabling the 5G network, the modem searches for an LTE (that is, 4G) cell and camps on the 4G cell (that is, searching for and camping on an LTE cell).

In other implementations, other reasons such as poor quality of the 5G network can also trigger the terminal to return from the 5G network to the 4G network, being not limited to S5011.

S502: The modem and LTE complete RRC access.

S503: The modem sends a tracking area update request message to LTE.

It may be understood that, according to a communication protocol, before S503 is performed, S502 needs to be performed or may not be performed. S502 is not a mandatory step.

S504: LTE sends the tracking area update request message to a core network.

In this embodiment, it is assumed that, in a case in which the modem has not yet received a tracking area update accept message after sending the tracking area update request message, the user enables the 5G network on the terminal, that is, the following step is performed.

It may be understood that, before S505 is performed, it is possible that the core network has sent the tracking area update accept message but the tracking area update accept message has not yet reached the terminal, or it is possible that the core network has not yet sent the tracking area update accept message. For a purpose of highlighting that the terminal has not received the tracking area update accept message, in FIG. 5, it is assumed that the core network has sent the tracking area update accept message but the tracking area update accept message has not yet reached the terminal.

S505: The modem returns from the 4G network to the 5G network.

In some implementations, the user enables the 5G network on the terminal, triggering the terminal to return from the 4G network to the 5G network. An example is provided by S5051 and S5052: The user enables the 5G network on the terminal based on the interface of the terminal. The AP in the terminal sends, to the modem based on the user's operation of enabling the 5G network on the terminal, a message of enabling the 5G network. In response to the message of enabling the 5G network, the modem searches for a 5G cell and camps on the 5G cell (searching for and camping on a 5G cell).

In other implementations, other reasons such as improved quality of the 5G network can also trigger the terminal to return from the 4G network to the 5G network, being not limited to S5051.

S506: The modem sends a registration request message to NR. The registration request message carries the TAU req message and a first field.

It may be understood that the registration request message sent in S506 is used for mobility registration updating. In other words, a type of the registration request message sent in this step is mobility registration updating (mobility registration updating, MRU).

In some implementations, the first field is used to indicate that a registration type is mobility registration updating. In other words, the registration request message indicates types of requested registrations by carrying different fields, with the first field indicating that the registration type is mobility registration updating. An example of the first field is "010".

Certainly, registration types may be alternatively indicated in another manner.

In some implementations, if determining that a tracking area update request message is already sent, the modem sends a registration request message carrying the TAU req message to NR.

In other implementations, if determining that a tracking area update request message is already sent but no tracking area update accept message is received, the modem sends a registration request message carrying the TAU req message to NR.

A specific manner for determining whether a tracking area update request message is already sent is setting a flag (flag). After a tracking area update request is sent, the flag is set to 1; and after a TAU accept or reject message is received, the flag is set to 0. Therefore, whether a tracking area update request is already sent can be determined based on the flag. Another specific manner is setting a state machine and setting corresponding state machine states for steps in a TAU procedure. For example, after a TAU request (Tracking Area Update Request) is sent, the state machine enters a state A; after TAU accept is received, the state machine enters a state B; after a TAU complete message is sent, the state machine is set to a state C; and the like. Whether a TAU request is sent is determined based on a state of the state machine.

In still other implementations, the modem does not determine whether a tracking area update request message is already sent, but directly sends a registration request message carrying a TAU req message when a registration request message needs to be sent.

It may be understood that, in the procedure shown in FIG. 3, the modem should send a registration request message not carrying a TAU req message because a condition that "1) a UE operating in single-registration mode performs an inter-system change from S1 mode to N1 mode" is not met, but in this step, the modem sends a registration request message carrying a TAU req message, which lays a foundation for resolving a problem that the terminal is unreachable when being called or fails to receive a short message service message in the 5G network.

S507: NR sends, to the core network, the registration request message carrying the TAU req message.

S507 makes it possible for a 5G core network to obtain information of the terminal (for example, context information) from a 4G core network, laying a foundation for resolving the problem that the terminal is unreachable when being called or fails to receive a short message service message in the 5G network.

A specific procedure performed by the core network is not described herein.

According to the communication protocol, the core network may perform S508, or may perform S510.

S508: The core network sends a registration accept message to NR.

S509: NR sends the registration accept message to the modem.

At this point, the mobile phone resides in NR and is in an idle (IDLE) state. Because the core network can obtain the TAU req message, the core network can obtain information of the mobile phone on the 4G network (for example, context information). Therefore, the terminal can be properly called and can properly receive a short message service message.

It may be understood that, because it is assumed herein that all stipulations in the communication protocol except the condition that "1) a UE operating in single-registration mode performs an inter-system change from S1 mode to N1 mode" are met, the terminal can be properly called and can properly receive a short message service message. Considering other stipulations in the communication protocol, the communication method provided in this embodiment can increase a possibility that the terminal can be properly called and can properly receive a short message service message after returning from the 4G network to the 5G network.

S510: The core network sends a registration reject (Registration Reject) message to NR.

S511: NR sends the registration reject message to the modem.

Neither a communication protocol nor a specific procedure according to which the core network sends the registration reject message is described herein.

S512: In response to the registration reject message, the modem initiates an initial registration to the network.

The initial registration is of a different type than mobility registration updating initiated in S506. According to the communication protocol, in response to the registration reject message, the modem initiates an initial registration to the network.

A specific procedure of the initial registration is not described herein.

After the initial registration is completed, the terminal can be properly called and can properly receive a short message service message. Considering other faults or factors, the procedure shown in FIG. 5 can increase the possibility that the terminal is properly called and properly receives a short message service message after returning from the 4G network to the 5G network.

According to the procedure shown in FIG. 5, when initiating a registration request of the mobility registration updating type, the terminal adds a TAU request message to the registration request, helping increase the possibility that the terminal is properly called and properly receives a short message service message after completing registration in the 5G network.

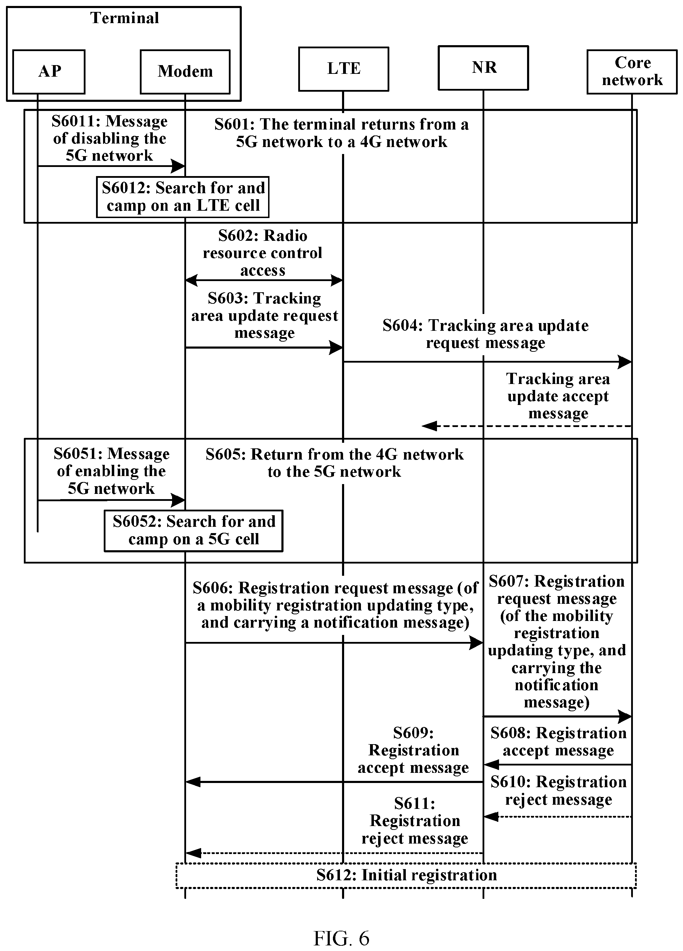

FIG. 6 shows another communication method according to an embodiment of this application. A procedure shown in FIG. 6 differs from the procedure shown in FIG. 5 in that a registration request message carries a notification message instead of a TAU req message. The notification message indicates that TAU for a terminal in a 4G network is not completed.

In some implementations, if determining that a tracking area update request message is already sent, and further determining that no tracking area update accept message is received, a modem sends a registration request message carrying a notification message to NR. For a specific determining manner, refer to the determining manners in S506. In other implementations, the modem does not determine whether a tracking area update request message is already sent, but directly sends a registration request message carrying a notification message when a registration request message needs to be sent. The notification message may be used as a field in a registration request message for a registration of a mobility updating type.

As described above, the notification message is to inform a 5G network-core network device in a core network that TAU in the 4G network is not completed. The 5G network-core network device determines a subsequent step based on the notification message. In some implementations, the 5G network-core network device obtains information of the terminal (including routing information, for example, context information) from a 4G network-core network device and performs S608, laying a foundation for the terminal to be properly called and to properly receive a short message service message in a 5G network. In other implementations, the 5G network-core network device performs S610, that is, directly rejects a registration request, to trigger the terminal to perform an initial registration, also laying a foundation for the terminal to be properly called and to properly receive a short message service message in the 5G network.

For specific implementations of all steps in FIG. 6, refer to FIG. 5. Details are not described herein again.

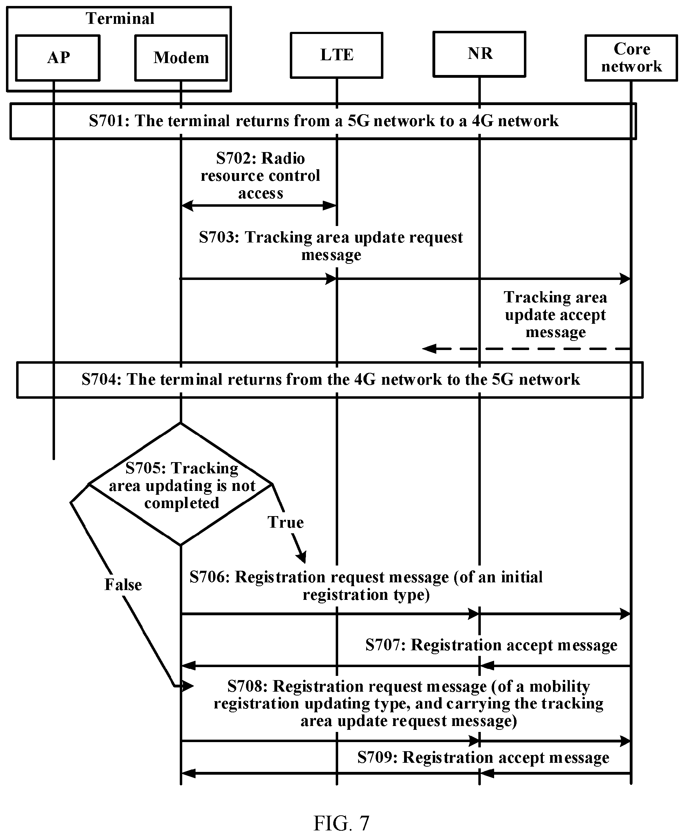

FIG. 7 shows another communication method according to an embodiment of this application. A procedure shown in FIG. 7 differs from the procedure shown in FIG. 5 or FIG. 6 in that a terminal initiates an initial registration to a network when determining that TAU is not completed.

FIG. 7 includes the following steps.

S701: The terminal returns from a 5G network to a 4G network.

S702: A modem and LTE complete RRC access.

S703: The modem sends a tracking area update request message to a core network via LTE.

In this embodiment, it is assumed that, in a case in which the modem has not yet received a tracking area update accept message after sending the tracking area update request message, the terminal is triggered to return to the 5G network.

S704: The modem returns from the 4G network to the 5G network.

S705: The modem determines whether TAU is not completed.

In some implementations, the modem determines that a tracking area update request message is already sent but no tracking area update accept message is received in the 4G network. In this case, the modem obtains a determining result that TAU is not completed.

In other implementations, as described above, the modem determines, based on a state of a state machine, whether TAU is not completed.

Compared with a registration for mobility and periodicity, an initial registration results in at least a significant change in core network data. Therefore, in this step, that TAU is not completed needs to be determined before an initial registration procedure is triggered.

It may be understood that S706 may be directly performed with S705 not performed. Alternatively, S705 may be replaced with determining that a tracking area update request message is already sent.

If a determining result is true, S706 and S707 are performed; or if a determining result is false, S708 and S709 are performed.

S706: The modem sends a registration request (Registration Request) message to the core network via NR. The registration request message carries a second field.

The second field indicates that a registration type is initial registration (Initial Registration). An example of the second field is "001". It may be understood that using the second field to indicate initial registration is merely an example and is not used as a limitation.

S707: The core network sends a registration accept (Registration Accept) message to the modem via NR.

At this point, the terminal completes the initial registration to the network. Therefore, a 5G network-core network already has information of the terminal, increasing a possibility that the terminal is properly called and properly receives a short message service message.

It may be understood that the terminal's initial registration to the network may be unsuccessful. In this case, for an implementation, refer to S510 to S512, that is, the terminal may initiate an initial registration again. For another implementation, refer to stipulations in a communication protocol regarding unsuccessful initial registrations. Details are not described herein.

S708: The modem sends a registration request message of an MRU type to the core network via NR.

The registration request message sent in this step carries the TAU req message.

S709: The core network sends a registration accept message to the modem via NR.

According to the procedure shown in FIG. 7, after determining that TAU fails, the terminal initiates an initial registration to the network, so that the network can create the information of the terminal, increasing the possibility that the successfully registered terminal is unreachable when being called or fails to receive a short message service message for a long time.

## Claims

1. A communication method, comprising:
sending, by a terminal, a tracking area update request message in a first network, with no tracking area update accept message received in the first network;
returning, by the terminal, from the first network to a second network; and
sending, by the terminal, a registration request message in the second network, wherein the registration request message carries a first message, the registration request message is used for initiating mobility registration updating, and the first message indicates that tracking area updating for the terminal in the first network is not completed.

2. The communication method according to claim 1, wherein before sending, by the terminal, the tracking area update request message in the first network, the method further comprises:
in response to an operation of disabling the second network on the terminal, returning, by the terminal, from the second network to the first network; and
returning, by the terminal, from the first network to the second network comprises:
in response to an operation of enabling the second network on the terminal, returning, by the terminal, from the first network to the second network.

3. The communication method according to claim 1 or 2, wherein the first message comprises:
the tracking area update request message or a notification message, wherein the notification message indicates that the terminal does not receive a tracking area update accept message in the first network.

4. The communication method according to claim 1 or 2, wherein before sending the registration request message in the second network, the method further comprises:
determining, by the terminal, that the tracking area update message is already sent in the first network.

5. The communication method according to claim 4, wherein before sending the registration request message in the second network, the method further comprises:
determining, by the terminal, that no tracking area update accept message is received in the first network.

6. The communication method according to claim 1 or 2, wherein after sending, by the terminal, the registration request message in the second network, the method further comprises:
receiving, by the terminal, a registration reject message; and
initiating, by the terminal, an initial registration in the second network.

7. The communication method according to claim 1 or 2, wherein the registration request message further carries a first field, and the first field indicates that a type of the registration request message is mobility registration updating.

8. A communication method, comprising:
sending, by a terminal, a tracking area update request message in a first network, with no tracking area update accept message received in the first network;
returning, by the terminal, from the first network to a second network; and
initiating, by the terminal, an initial registration in the second network.

9. The communication method according to claim 8, wherein before sending, by the terminal, the tracking area update request message in the first network, the method further comprises:
in response to an operation of disabling the second network on the terminal, returning, by the terminal, from the second network to the first network; and
returning, by the terminal, from the first network to the second network comprises:
in response to an operation of enabling the second network on the terminal, returning, by the terminal, from the first network to the second network.

10. The communication method according to claim 8 or 9, wherein before initiating, by the terminal, the initial registration in the second network, the method further comprises:
determining, by the terminal, that tracking area updating is not completed in the first network.

11. The communication method according to claim 10, wherein determining that tracking area updating is not completed in the first network comprises:
determining that in the first network, the tracking area update request message is already sent but no tracking area update accept message is received.

12. A communication method, comprising:
receiving, by a core network device in a second network, a registration request message sent by a terminal, wherein the registration request message carries a notification message, the notification message indicates that tracking area updating for the terminal in a first network is not completed, and the registration request message is used for initiating mobility registration updating in the second network.

13. The communication method according to claim 12, wherein after receiving the registration request message sent by the terminal, the method further comprises:
obtaining, by the core network device in the second network, routing information of the terminal from a core network device in the first network.

14. The communication method according to claim 12, wherein after receiving the registration request message sent by the terminal, the method further comprises:
sending, by the core network device in the second network, a registration reject message to the terminal, wherein the registration reject message triggers the terminal to initiate an initial registration to the core network device in the second network.

15. A terminal, comprising:
a processor, wherein the processor comprises a baseband processor; and
the baseband processor is configured to implement the communication method according to any one of claims 1 to 11.

16. The terminal according to claim 15, wherein
the processor further comprises an application processor;
the baseband processor is further configured to implement a communication function based on a first network or a second network; and
the application processor is configured to send, to the baseband processor, a message of disabling or enabling the second network.

17. A chip, comprising:
a modem, configured to implement the communication method according to any one of claims 1 to 11.

18. A network device, comprising a memory and a processor, wherein
the memory is configured to store a computer program, and the processor is configured to run the computer program to implement the communication method according to any one of claims 12 to 14.
